Europäisches Patentamt

European Patent Office

Office européen des brevets

(19)

(11) Publication number: **0 507 242 A1**

## EUROPEAN PATENT APPLICATION

(12)

(21) Application number: **92105487.0**

(22) Date of filing: **30.03.92**

(51) Int. Cl.⁵: **G11B 7/24**, G02F 1/135

(30) Priority: **02.04.91 JP 96335/91**

(43) Date of publication of application:
**07.10.92 Bulletin 92/41**

(84) Designated Contracting States:
**DE FR GB**

(71) Applicant: **YOZAN INC.**
**3-5-18, Kitazawa, Setagaya-ku**
**Tokyo 155(JP)**

(72) Inventor: **Takatori, Sunao, c/o YOZAN Inc.**
**3-5-18, Kitazawa**
**Setagaya-ku, Tokyo 155(JP)**

(74) Representative: **Patentanwälte Grünecker,**
**Kinkeldey, Stockmair & Partner**
**Maximilianstrasse 58**
**W-8000 München 22(DE)**

(54) **Optical memory.**

(57) The present invention offers an optical memory with high-speed access able to read and write in high-speed, and appropriate to random access to two-dimensional information.

An optical memory comprising a light receiving means made from material with photovoltaic effect, a ferroelectric liquid crystal panel whose parts are electrically connected one another by minute area, an electrode for impressing electric field of reverse direction of that of the light receiving means to the part, and a switch for connecting the electrode and the part able to turn on and off.

**Fig. 1**

6 5 1 2 5 6

EP 0 507 242 A1

## FIELD OF THE INVENTION

The present invention relates to an optical memory, especially to an optical memory from which read and to which write.

## BACKGROUND OF THE INVENTION

Conventionally, an optical disk is known as a device for recording information of optical signal. A magneto-optical disk is thought to be the most convincing by way of an optical disk which can be read and written. The standardization of it has been prepared. (Nikkei Electronics, 91-2-4, p75)

## SUMMARY OF THE INVENTION

But the reading and writing information of an optical disk is sequential because the information is put in sequence on a magnetic head. It takes twenty or thirty millisecond for access, which is approximately thousand times of necessary time for memory IC. It means that the access speed of an optical disk is extremely slow and it is originally inappropriate to random access of two-dimensional information.

The present invention is invented to solve such conventional problems and to provide an optical memory possible to reading and writing in high speed.

The optical memory according to the present invention stores the optical information in the state of liquid crystal by a liquid crystal drive with photovoltaic effect or that using switching with photoconductive effect. Both of them make use of the bis-table characteristic of dielectric liquid crystal. The subject optical memory clears memory in one lump by giving electric field of reverse direction to the dielectric liquid crystal.

In the optical memory according to the present invention, writing time is the sum of the time for electrical addressing and for changing the state of liquid crystal, and reading time is the time for taking out the state of liquid crystal as the surface information.

## BRIEF DESCRIPTION OF THE DRAWINGS

Fig. 1 shows a cross section of an optical memory using thin film with photovoltaic effect.

Fig. 2 shows a circuit to indicate the state of electric connection between a liquid crystal panel and a thin film with photovoltaic effect.

Fig. 3 shows a cross section of an optical memory using thin film with photoconductive effect.

Fig. 4 shows a circuit to indicate the state of electric connection between a liquid crystal panel and a thin film with photoconductive effect.

"1" shows a thin film (light receiving means with photovoltaic effect).

"2" shows a ferroelectric liquid crystal panel.

"3" shows a part.

"7" shows a thin film (light receiving means with photoconductive effect).

"SW1" and "SW2" show switches.

## PREFERRED EMBODIMENT OF THE PRESENT INVENTION

Hereinafter, the first embodiment of the optical memory according to the present invention is described with reference to the attached drawings.

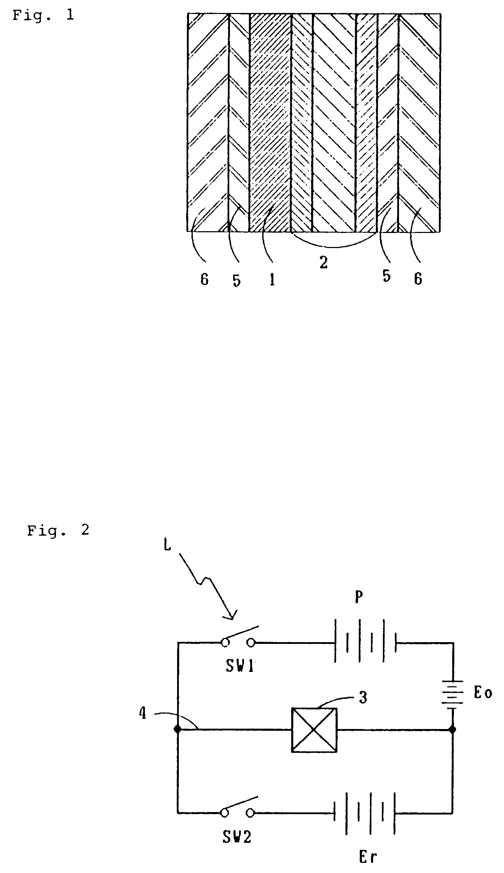

In Fig. 1, the optical memory is produced by making thin film 1 of a-SiH, for example, and ferroelectric liquid crystal panel 2 adhere.

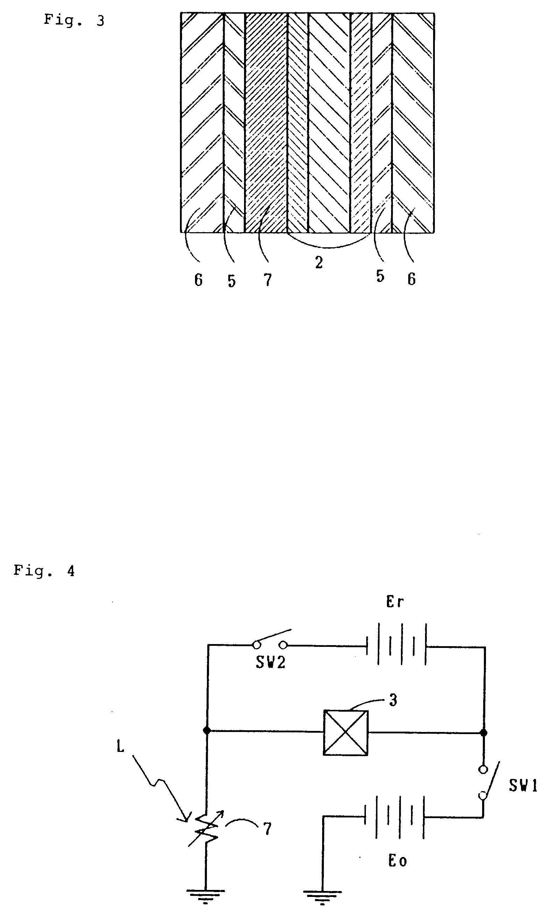

Fig. 2 shows the electric connection between liquid crystal panel 2 and thin film 1. "3" of a part of liquid crystal panel 2 (a unit used for displaying one pixel on a liquid crystal panel) is connected to "P" which is the corresponding part of thin film "1" by electrode "4". "P" has a dimension corresponding to a size of one pixel to be processed. Thin film "1" generates electromotive force by light incidence "L" and change the state of the liquid crystal of part "3". In Fig. 2, the generation of electromotive force by light is shown by switch "SW1".

Lucent electrodes "5" are adhered on the both out sides to thin film "1" and liquid crystal panel "2" which are adhered each other on the both out sides. When the state changes by the incidence of light, bias voltage "E0" is added to lucent electrodes "5". The bias voltage is controlled according to the input conditions of light.

The whole of the optical memory is protected by covering by glass boards "6" on both sides of it.

In order to write on optical memory, two-dimensional optical information such as an image is inputted to thin film "1". Consequently, electromotive force enough to generate the change of state of liquid crystal is generated on part "P" which received optical energy equal to or more than the predetermined quantity in connection with bias voltage "E0", and the state of liquid crystal of part "3" corresponding to it is changed.

It is possible to read optically the state of part "3" as the two-dimensional image from the opposite side of thin film 1. An image scanner can be used for the tool for reading.

In this way, optical memory makes it possible to write and read directly the two-dimensional optical information. The necessary time for writing is only the time of changing state of liquid crystal. The necessary time for changing state can be expected to be from 100 to 999 micro second on mass production.

It is necessary to clear the storage of optical memory in order to write new information after writing some information on an optical memory. Power source "Er" for reverse-bias and switch "SW2" are connected to lucent electrode "5" to do so. The liquid crystal of all parts are restored to the initial state in a lump by closing switch "SW2".

Next, the second embodiment is described according to Fig. 3.

Fig. 3 shows a section of the second embodiment. Thin film "7" which has photoconductive effect is used instead of the thin film which has photovoltaic effect.

In Fig. 4, thin film "7" is shown as a variable resistance of an equivalent circuit. The state of the liquid crystal of part "3" changes because of the increase of electromotive force for part "3" by bias voltage "E0" of lucent electrode "5" when the resistance of thin film "7" decreases by the photoconductive effect. Reverse electromotive force of power source "Er" is used for clarifying memory in this embodiment, too.

As mentioned above, the present invention makes it possible to access in high speed, read and write appropriately to random access of the two-dimensional information in high speed.

**Claims**

1. An optical memory comprising a light receiving means made from material with photovoltaic effect, said light receiving means being divided into a plurality of minute areas corresponding to image pixels to be processed, a ferroelectric liquid crystal panel whose liquid crystal parts are electrically connected to minute areas of said light receiving means, an electrode for impressing electric field of reverse direction of that of said light receiving means to said part, and a switch for switchiably connecting said electrode to said liquid crystal.

2. An optical memory comprising a light receiving means made from photoconductive material, said light receiving means being divided into a plurality of minute areas corresponding to image pixels to be processed, a ferroelectric liquid crystal panel whose liquid parts are electrically connected to minute area of said light receiving means, the first electrode for impressing electric field to said part, the second electrode for impressing electric field of reverse direction of said electric field, and the first and second switches for switchably connecting said first and second electrodes to said parts, respectively.

Fig. 1

6   5   1        2        5   6

Fig. 2

L

P

SW1

Eo

4

3

SW2

Er

Fig. 3

6  5  7        2        5  6

Fig. 4

| | DOCUMENTS CONSIDERED TO BE RELEVANT | | EP 92105487.0 |
|---|---|---|---|

| Category | Citation of document with indication, where appropriate, of relevant passages | Relevant to claim | CLASSIFICATION OF THE APPLICATION (Int. Cl.5) |
|---|---|---|---|
| P,A | EP - A - 0 437 238 (SEIKO) * Claim 1 * | 1,2 | G 11 B 7/24 G 02 F 1/135 |
| A | EP - A - 0 402 944 (SEIKO) * Claim 1 * | 1,2 | |
| A | GB - A - 2 181 263 (STC plc) * Claims 1-5 * | 1,2 | |
| A | DE - A - 2 261 576 (HITACHI) * Claim 1 * | 1,2 | |
| A | EP - A - 0 385 329 (BASF) * Claim 1 * | 1 | |
| P,A | PATENT ABSTRACTS OF JAPAN, unexamined applications, field P, vol. 15, no. 140, April 09, 1991 THE PATENT OFFICE JAPANES GOVERNMENT page 116 P 1189 * Kokai-no. 3-20 719 (SEIKO) * | 1,2 | **TECHNICAL FIELDS SEARCHED (Int. Cl.5)** G 11 B 7/00 G 02 F 1/00 |
| A | PATENT ABSTRACTS OF JAPAN, unexamined applications, field P, vol. 13, no. 172, April 24, 1989 THE PATENT OFFICE JAPANESE GOVERNMENT page 74 P 862 * Kokai-no. 1-7 022 (IDEMITSU KOSAN) * | 1,2 | |

The present search report has been drawn up for all claims

| Place of search | Date of completion of the search | Examiner |
|---|---|---|
| VIENNA | 01-06-1992 | HAMMER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

-2-

## DOCUMENTS CONSIDERED TO BE RELEVANT

EP 92105487.0

| Category | Citation of document with indication, where appropriate, of relevant passages | Relevant to claim | CLASSIFICATION OF THE APPLICATION (Int. Cl.5) |
|---|---|---|---|
| P,A | PATENT ABSTRACTS OF JAPAN, unexamined applications, field P, vol. 15, no. 162, April 23, 1991 THE PATENT OFFICE JAPANESE GOVERNMENT page 80 P 1194 * Kokai-no. 3-29 926 (SEIKO) * | 1,2 | |
| | | | TECHNICAL FIELDS SEARCHED (Int. Cl.5) |

The present search report has been drawn up for all claims

| Place of search | Date of completion of the search | Examiner |
|---|---|---|
| VIENNA | 01-06-1992 | HAMMER |

EPO FORM 1503 03.82 (P0401)